# EUROPÄISCHE PATENTSCHRIFT

(11) **EP 0 402 890 B1**
(45) Veröffentlichungstag und Bekanntmachung des Hinweises auf die Patenterteilung: **04.09.1996**
(21) Anmeldenummer: 90111185.6
(22) Anmeldetag: 13.06.1990
(51) Int. Cl.: H04J 3/08

(54) **Zwischenstelle in einer Nachrichtenübertragungsstrecke**
Intermediary station in a communications transmission link
Station intermédiaire d'une liaison de transmission d'informations

(30) Priorität: 16.06.1989 DE 3919680
(43) Veröffentlichungstag der Anmeldung: 19.12.1990
(73) Patentinhaber: Alcatel SEL Aktiengesellschaft, D-70435 Stuttgart (DE); ALCATEL N.V., NL-1077 XX Amsterdam (NL)
(72) Erfinder: Neth, Alois, D-7140 Ludwigsburg (DE)
(74) Vertreter: Pohl, Herbert, Dipl.-Ing

(56) Entgegenhaltungen:
- US-A- 4 090 035
- US-A- 4 393 492

## Beschreibung

Die Erfindung betrifft eine Zwischenstelle in einer Übertragungsstrecke für die Digitalsignalübertragung im Zeitmultiplex-Verfahren mit einer Schaltung zum Abzweigen von Zeitkanälen aus dem ankommenden Zeitmultiplexsignal.

Eine übertragungsstrecke dient z.B. zur übertragung von digitalen Fernsprech- und Datensignalen, die eine Bitfolgefrequenz von 64 kbit/s haben. Gebündelt zu einem Zeitmultiplexsignal mit 32 Zeitkanälen, werden sie mit einer Bitfolgefrequenz von 2048 kbit/s übertragen. Die übertragungsstrecke enthält Zwischenstellen, an denen einzelne Zeitkanäle abgezweigt werden. Es gibt auch Zwischenstellen, in denen die abgezweigten Zeitkanäle oder ein Teil der abgezweigten Zeitkanäle wiederbelegt werden.

Aus "telcom report", 10 (1987) Special "Multiplex- und Leitungseinrichtungen", S. 43-50, ist eine derartige Zwischenstelle, dort Abzweiggerät genannt, bekannt.

Diese Zwischenstelle gibt Alarm bei Fehlern oder Störungen in dem zu übertragenden Zeitmultiplexsignal, etwa bei überschreiten einer bestimmten Bitfehlerhäufigkeit. Wenn dieser Fehler in der Zwischenstelle festgestellt wird oder wenn ein ankommendes Digitalsignal ausfällt, wird ein Alarmsignal in übertragungsrichtung gesendet. Bei einem durch eine Zwischenstelle selbst ausgelösten Alarm wird die Nachrichtenübertragung jedoch unterbrochen.

In der Schrift US 43 93 492 ist ein digitales Übertragungssystem mit Zwischenstellen, Umgehungsmitteln und Alarmanzeigemitteln beschrieben. Tritt in einer Zwischenstelle ein Alarm auf, so werden die für die Zwischenstelle bestimmten Nachrichten über ein Umgehungsmittel zur nächsten Zwischenstelle weitergeleitet, um die Nachrichtenübertragung bei einem Alarm aufrechtzuerhalten. Dies hat den Nachteil, daß für die Dauer des Alarms die für die Zwischenstelle bestimmten Nachrichten unnötigerweise Übertragungskapazität blockieren.

In der Schrift US 40 90 035 ist ein Modul für ein digitales Übertragungssystem zum Testen von Übertragungskanälen beschrieben. Bei der gemultiplexten digitalen Datenübertragung werden die Daten eines fest vorgegebenen Übertragungskanals gelöscht und der Übertragungskanal mit Testbytes belegt, um seine Funktionsfähigkeit zu prüfen.

Es ist deshalb Aufgabe der Erfindung, die Nachrichtenübertragung bei einem Alarm in einer Zwischenstelle aufrechtzuerhalten.

Diese Aufgabe wird durch die Lehre des Patentanspruchs 1 gelöst. Vorteilhafte Ausgestaltungen sind den Unteransprüchen zu entnehmen.

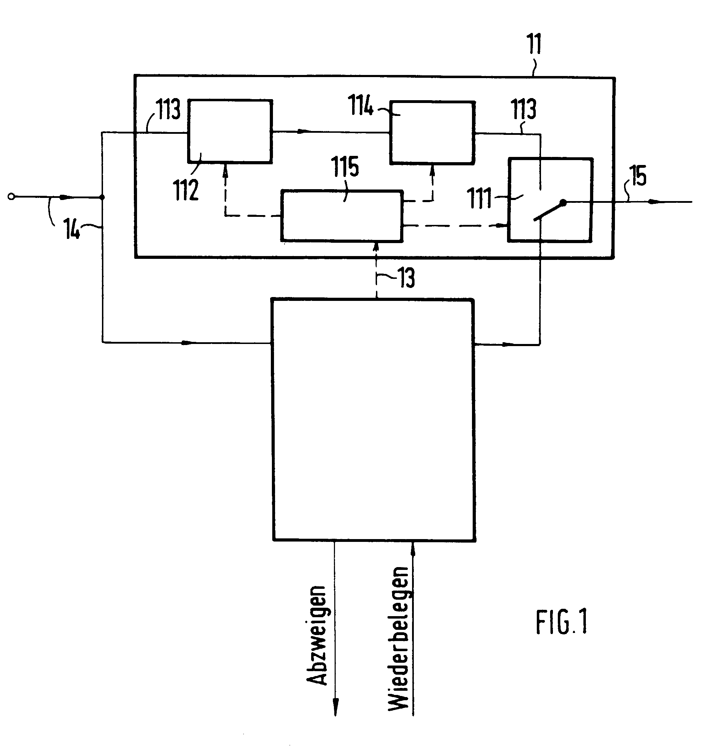

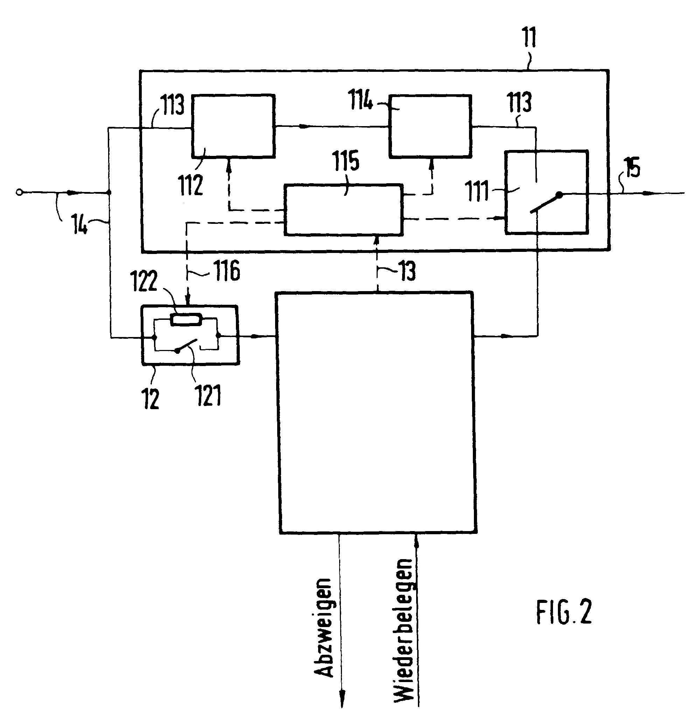

Im folgenden wird die Erfindung anhand zweier Ausführungsbeispiele unter Zuhilfenahme der Figuren 1 und 2 erläutert. Es zeigen:
- Fig. 1: das Blockschaltbild einer Zwischenstelle mit einer Umgehungsschaltung und
- Fig. 2: das Blockschaltbild einer Zwischenstelle mit einer Umgehungsschaltung (nach Fig. 1) und einer Eingangsschaltung.

Die Zwischenstelle (Fig. 1) dient zum Abzweigen und Wiederbelegen von Zeitkanälen eines Zeitmultiplexsignals, das ihr über eine Eingangsleitung 14 zugeführt wird und das über eine Ausgangsleitung 15 zu einer Nachbarzwischenstelle übertragen wird. Die Zwischenstelle enthält eine Umgehungsschaltung 11. Diese besteht aus einer Umgehungsstrecke 113, einer Löschvorrichtung 112, einer Vorrichtung 114 zum Aussenden einer Nachricht, einem Schalter 11 und einer Steuerschaltung 115, die die Löschvorrichtung 112, die Vorrichtung 114 und den Schalter 111 steuert.

Die Steuerschaltung wird über eine Steuerleitung 13 von der Zwischenstelle gesteuert.

Wird in der Zwischenstelle ein Alarm ausgelöst, wird das Zeitmultiplexsignal über die Umgehungsschaltung 11 weitergeleitet.

Ein solcher Alarm kann beispielsweise auftreten, wenn der Pegel der Versorgungsspannung auf einen Wert absinkt, bei dem die Zwischenstelle ihre Funktionen nicht mehr einwandfrei ausübt. Dann gibt sie über die Steuerleitung 13 ein Signal an die Steuerschaltung 115, die daraufhin einen Schalter 111 schließt, so daß das Zeitmultiplexsignal über die Umgehungsstrecke 113 an der Zwischenstelle vorbeigeleitet wird.

Das Zeitmultiplexsignal wird innerhalb der Umgehungsstrecke 113 der Löschvorrichtung 112 zugeführt.

In einer anderen erfindungsgemäßen, hier nicht dargestellten, Ausführung einer Zwischenstelle, in der die Zeitkanäle nur abgezweigt werden sollen, werden diese, wenn in dieser Zwischenstelle ein Alarmzustand besteht, in der Löschvorrichtung 112 gelöscht, um zu vermeiden, daß ihr Inhalt von einer anderen Zwischenstelle in übertragungsrichtung oder der Leitungsendeinrichtung einem anderen Empfänger zugeführt wird.

Die beschriebene Zwischenstelle dient sowohl zum Abzweigen von Zeitkanälen als auch zum Wiederbelegen der abgezweigten Zeitkanäle. Zum Wiederbelegen dient eine - hier nicht dargestellte - Wiederbelegschaltung.

Bei einem Alarm löscht die Löschvorrichtung 112 den Inhalt der abzuzweigenden Zeitkanäle, und die Vorrichtung 114 gibt in den wiederzubelegenden Zeitkanälen eine Nachricht an eine Nachbarzwischenstelle oder an mehrere Nachbarzwischenstellen weiter. Aufgrund der Nachricht werden die in der Zwischenstelle nicht wiederbelegten Zeitkanäle in der Nachbarzwischenstelle oder den Nachbarzwischenstellen wiederbelegt.

Sofern das Zeitmultiplexsignal einen Dienstkanal enthält, sendet sowohl in einer Zwischenstelle mit alleiniger Abzweigung als auch in der in Fig. 1 dargestellten Zwischenstelle mit Abzweigung und Wiederbelegung von Zeitkanälen die Vorrichtung 114 Nachrichten in dem Dienstkanal an eine Nachbarzwischenstelle oder an mehrere Nachbarzwischenstellen und/oder an die Leitungsendeinrichtung.

In der in Fig. 1 dargestellten Zwischenstelle sendet die Vorrichtung 114 eine Nachricht an eine Nachbarzwischenstelle oder an mehrere Nachbarzwischenstellen, damit die in der Zwischenstelle nicht wiederbelegten Zeitkanäle in der Nachbarzwischenstelle oder in den Nachbarzwischenstellen wiederbelegt werden.

In einer anderen Variante sendet die Zwischenstelle, solange kein Alarm ausgelöst ist, an bestimmten Stellen im Pulsrahmen des Multiplexsignals eine für die Zwischenstelle charakteristische Nachricht, so daß bei Ausbleiben dieser Nachricht in einer Nachbarzwischenstelle oder mehreren Nachbarzwischenstellen Folgemaßnahmen eingeleitet werden.

Eine andere Zwischenstelle (Fig. 2) weist eine in der Eingangsleitung 14 enthaltene Eingangsschaltung 12 auf. Die Eingangsschaltung 12 wird über eine Steuerleitung 116 von der Steuerschaltung 115 gesteuert. Die Eingangsschaltung 12 enthält einen hochohmigen Widerstand 122 und einen Schalter 121. Wenn der Schalter 121 geschlossen ist, wird der Widerstand 122 überbrückt.

Bei einem Alarm in der Zwischenstelle veranlaßt die Steuerschaltung 115 über die Steuerleitung 116 das öffnen des Schalters 121. Dann wird der Zwischenstelle das Zeitmultiplexsignal über den Widerstand 122 mit einem niedrigen Signalpegel zugeführt. Auf diese Weise wird der Pegel des zu übertragenden Zeitmultiplexsignals nur geringfügig niedriger; der Empfang in den Nachbarzwischenstellen und in der Leitungsendeinrichtung wird nicht merklich beeinträchtigt.

Wenn in der Zwischenstelle der Alarm beendet ist, z.B. dann, wenn die Versorgungsspannung wieder den Normalwert erreicht hat, kann die Zwischenstelle über die Steuerleitung 13 mittels der Steuerschaltung 115 die Umgehungsstreckeng 113 wieder außer Betrieb setzen, indem sie den Schalter 111 öffnet.

Die Steuerschaltung 115 der Umgehungsschaltung 11 bewirkt dann über die Steuerleitung 116 das Schließen des Schalters 121.

Es ist auch möglich, die Eingangsschaltung 12 unmittelbar von der Zwischenstelle aus zu steuern.

Anstelle des Schalters 121 und des Widerstands 122 läßt sich auch ein elektronisches Netzwerk mit logischen Gattern oder mit einem Relais einsetzen.

Ein solches Relais wird dann über die Steuerleitung 13 unmittelbar gesteuert und ändert bei Alarm selbsttätig die Position des Schalters 111. In diesem Fall erübrigt sich die Steuerschaltung 115.

## Patentansprüche

1. Zwischenstelle in einer Übertragungsstrecke für die Digitalsignalübertragung im Zeitmultiplex-Verfahren mit einer Schaltung zum Abzweigen von Zeitkanälen aus einem ankommenden Zeitmultiplexsignal, und mit einer Umgehungsschaltung (11), über die bei einem in der Zwischenstelle ausgelösten Alarm die Digitalsignale weitergeleitet werden,
**dadurch gekennzeichnet**
- daß die Umgehungsschaltung (11) eine Steuerschaltung (115), einen Schalter (111), eine Löschvorrichtung (112) und eine Umgehungsstrecke (113) enthält,
- daß die Steuerschaltung (115) den Schalter (111) so umschalten kann, daß das Zeitmultiplexsignal über die Umgehungsstrecke (113) übertragbar ist, und
- daß die Steuerschaltung (115) die Löschvorrichtung (112) in Betrieb setzen kann, so daß der Dateninhalt der abzuzweigenden Zeitkanäle in ihr gelöscht werden kann.

2. Zwischenstelle nach Anspruch 1,
dadurch gekennzeichnet,
- daß sie eine Wiederbelegschaltung enthält, in der die abzuzweigenden Zeitkanäle, wiederbelegt werden,
- daß die Umgehungsschaltung (11) eine Vorrichtung (114) zum Aussenden einer Nachricht enthält und
- daß die Vorrichtung (114) durch die Steuerschaltung (115) veranlaßt wird, bei einem in der Zwischenstelle ausgelösten Alarm einer Nachbarzwischenstelle oder mehreren Nachbarzwischenstellen in Übertragungsrichtung in einem nicht wiederbelegten Zeitkanal eine Nachricht zu senden, aufgrund deren die in der Zwischenstelle nicht wiederbelegten Zeitkanäle in der Nachbarzwischenstelle oder in den Nachbarzwischenstellen wiederbelegt werden können.

3. Zwischenstelle nach Anspruch 1,
dadurch gekennzeichnet,
- daß die Umgehungsschaltung (11) eine Vorrichtung (114) zum Aussenden einer Nachricht enthält und
- daß die Vorrichtung (114) durch die Steuerschaltung (115) veranlaßt wird, in einem Dienstkanal des Zeitmultiplexsignals eine Nachricht an eine Nachbarzwischenstelle oder an mehrere Nachbarzwischenstellen und/oder an die Leitungsendeinrichtung zu senden.

4. Zwischenstelle nach Anspruch 1,
dadurch gekennzeichnet,
- daß sie eine Wiederbelegschaltung enthält, in der die abzuzweigenden Zeitkanäle wiederbelegt werden,
- daß die Umgehungsschaltung (11) eine Vorrichtung (114) zum Aussenden einer Nachricht enthält und
- daß die Vorrichtung (114) durch die Steuerschaltung (115) veranlaßt wird, in einem Dienstkanal des Zeitmultiplexsignals einer Nachbarzwischenstelle oder mehreren Nachbarzwischenstellen in Übertragungsrichtung eine Nachricht zu senden, aufgrund deren die in der Zwischenstelle nicht wiederbelegten Zeitkanäle in der Nachbarzwischenstelle oder in den Nachbarzwischenstellen wiederbelegt werden können.

5. Zwischenstelle nach Anspruch 1,
dadurch gekennzeichnet,
- daß sie in festen Zeitabständen eine für sie charakteristische Nachricht aussendet, und
- daß bei Ausbleiben dieser Nachricht in einer Nachbarzwischenstelle oder in mehreren Nachbarzwischenstellen Folgemaßnahmen eingeleitet werden.

6. Zwischenstelle nach Anspruch 1,
dadurch gekennzeichnet,
- daß der Zwischenstelle eine Eingangsschaltung (12) vorgeschaltet ist, die bei einem in der Zwischenstelle ausgelösten Alarm bewirkt, daß dieser das Zeitmultiplexsignal über einen hochohmigen Widerstand (122) zugeführt wird,
- daß die Steuerschaltung (115) über eine Alarmleitung (13) veranlaßt, den Schalter (111) bei Beendigung des Alarms wieder zu öffnen, so daß das Zeitmultiplexsignal nicht mehr über die Umgehungsstrecke (113) übertragen wird.

## Claims

1. Intermediate station in a transmission link for digital signal transmission using the time-division multiplex method, having a circuit for deriving time slots from an incoming time-division-multiplex signal, and having a bypass circuit (11), via which the digital signals are routed when an alarm is tripped in the intermediate station,
**characterised in that**
- the bypass circuit (11) contains a control circuit (115), a switch (111), an erasing device (112) and a bypass path (113),
- the control circuit (115) can change over the switch (111) so that the time-division-multiplex signal can be transmitted over the bypass path (113), and
- the control circuit (115) can start the erasing device (112), so that the data content of the time slots to be diverted can be erased in it.

2. Intermediate station according to Claim 1, characterised in that
- it contains a re-allocation circuit in which the time slots to be diverted are re-allocated,
- the bypass circuit (11) contains a device (114) for transmitting a message, and
- in the event of an alarm being triggered in the intermediate station, the device (114) is prompted by the control circuit (115) to transmit a message in a non re-allocated time slot to an adjacent intermediate station or several adjacent intermediate stations in the direction of transmission, on the basis of which the time slots not re-allocated in the intermediate station can be re-allocated in the adjacent intermediate station or stations.

3. Intermediate station according to Claim 1, characterised in that
- the bypass circuit (11) contains a device (114) for transmitting a message, and
- the device (114) is prompted by the control circuit (115) to transmit a message in a service channel of the time-division-multiplex signal to an adjacent intermediate station or to several adjacent intermediate stations and/or to the line terminating equipment.

4. Intermediate station according to Claim 1, characterised in that
- it contains a re-allocation circuit in which the time slots to be diverted are re-allocated,
- the bypass circuit (11) contains a device (114) to transmit a message, and
- the device (114) is prompted by the control circuit (115) to transmit a message in a service channel of the time-division-multiplex signal to an adjacent intermediate station or to several adjacent intermediate stations in the direction of the transmission, on the basis of which the time slots not re-allocated in the intermediate station can be re-allocated in the adjacent intermediate station or stations.

5. Intermediate station according to Claim 1, characterised in that
- it transmits at fixed intervals a message that is characteristic of it, and
- in the absence of this message, follow-up measures are initiated in an adjacent intermediate station or in several intermediate stations.

6. Intermediate station according to Claim 1, characterised in that
- an input circuit (12) is connected upstream of the intermediate station, so that when an alarm is triggered in the intermediate station, the time-division-multiplex signal is fed to this input circuit via a high-resistance resistor (122),
- via an alarm line (13), the control circuit (115) prompts the switch (111) to re-open at the end of the alarm, so that the time-division-multiplex signal is no longer transmitted over the bypass path (113).

## Revendications

1. Station intermédiaire d'une ligne de transmission pour la transmission de signaux numériques dans un procédé de multiplexage par répartition dans le temps comportant un circuit destiné à la dérivation de créneaux temporels à partir d'un signal de multiplexage temporel entrant, et comportant un circuit de dérivation (11), par l'intermédiaire duquel, lorsqu'une alarme est déclenchée dans la station intermédiaire, les signaux numériques sont acheminés, caractérisée
- en ce que le circuit de dérivation (11) comprend un circuit de commande (115), un interrupteur (111), un dispositif d'effacement (112) et une section de dérivation (113),
- en ce que le circuit de commande (115) peut commuter l'interrupteur (111) de sorte que le signal de multiplexage temporel peut être transmis par l'intermédiaire de la section de dérivation (113), et
- en ce que le circuit de commande (115) peut mettre en service le dispositif d'effacement (112) de sorte que le contenu des données des créneaux temporels à dériver peut être effacé dedans.

2. Station intermédiaire selon la revendication 1, caractérisée
- en ce qu'elle comprend un circuit de réaffectation, dans lequel les créneaux temporels à dériver sont réaffectés,
- en ce que le circuit de dérivation (11) comprend un dispositif (114) destiné à l'émission d'un message et
- en ce que le dispositif (114) est amené par le circuit de commande (115), lorsqu'une alarme est déclenchée dans la station intermédiaire, d'une station intermédiaire adjacente ou de plusieurs stations intermédiaires adjacentes, à envoyer un message dans le sens de transmission dans un créneau temporel non réaffecté, les créneaux temporels non réaffectés dans la station intermédiaire pouvant être réaffectés dans ia station intermédiaire adjacente ou dans les stations intermédiaires adjacentes sur la base dudit message.

3. Station intermédiaire selon la revendication 1, caractérisée
- en ce que le circuit de dérivation (11) comprend un dispositif (114) destiné à l'émission d'un message et
- en ce que le dispositif (114) est amené par le circuit de commande (115) à envoyer, dans une voie de service du signal de multiplexage temporel, un message a une station intermédiaire adjacente ou à plusieurs stations intermédiaires adjacentes et / ou au dispositif terminal de ligne.

4. Station intermédiaire selon la revendication 1, caractérisée
- en ce qu'elle comprend un circuit de réaffectation, dans lequel les créneaux temporels à dériver sont réaffectés,
- en ce que le circuit de dérivation (11) comprend un dispositif (114) destiné à l'émission d'un message et
- en ce que le dispositif (114) est amené par le circuit de commande (115) à envoyer, dans une voie de service du signal de multiplexage temporel d'une station intermédiaire adjacente ou de plusieurs stations intermédiaires adjacentes, un message dans le sens de transmission, les créneaux temporels non réaffectés dans la station intermédiaire pouvant être réaffectés dans la station intermédiaire adjacente ou dans les stations intermédiaires adjacentes sur la base dudit message.

5. Station intermédiaire selon la revendication 1, caractérisée
- en ce qu'elle émet, à intervalles fixes, un message caractéristique pour elle et
- en ce qu'en l'absence de ce message dans une station intermédiaire adjacente ou dans plusieurs stations intermédiaires adjacentes, des mesures consécutives sont introduites.

6. Station intermédiaire selon la revendication 1, caractérisée
- en ce qu'un circuit d'entrée (12) est monté en amont de la station intermédiaire, ledit circuit ayant pour effet lorsqu'une alarme est déclenchée dans la station intermédiaire, que le signal de multiplexage temporel est amené à cette station par l'intermédiaire d'une résistance de valeur ohmique élevée (122),
- en ce que le circuit de commande (115) est amené par l'intermédiaire d'une ligne d'alarme (13) à rouvrir le commutateur (111) à la fin de l'alarme, de sorte que le signal de multiplexage temporel n'est plus transmis par l'intermédiaire de la section de dérivation (113).
